# EUROPÄISCHE PATENTSCHRIFT

(11) **EP 3 055 590 B1**
(45) Veröffentlichungstag und Bekanntmachung des Hinweises auf die Patenterteilung: **16.08.2017**
(21) Anmeldenummer: 14766436.1
(22) Anmeldetag: 10.09.2014
(51) Int. Cl.: F16H 59/08, B60R 25/25, F16H 59/02, F16H 61/18

(54) **SHIFT-BY-WIRE BETÄTIGUNGSEINRICHTUNG UND VERFAHREN ZUR AUSWAHL VON FAHRSTUFEN**
SHIFT-BY-WIRE ACTIVATION DEVICE AND METHOD FOR SELECTING DRIVING POSITIONS
DISPOSITIF D'ACTIONNEMENT À COMMANDE ÉLECTRONIQUE ET PROCÉDÉ DE SÉLECTION DE RAPPORTS

(30) Priorität: 10.10.2013 DE 102013220404
(43) Veröffentlichungstag der Anmeldung: 17.08.2016
(73) Patentinhaber: ZF Friedrichshafen AG, 88046 Friedrichshafen (DE)
(72) Erfinder: FRIBUS, Vitali, 49610 Quakenbrück (DE); KIRILENKO, Alexander, 49356 Diepholz (DE)
(86) Internationale Anmeldenummer: PCT/EP2014/069241
(87) Internationale Veröffentlichungsnummer: WO 2015/051960

(56) Entgegenhaltungen:
- DE-A1- 10 348 221
- DE-A1-102006 010 909
- FR-A1- 2 943 160
- US-A1- 2003 029 261
- US-A1- 2004 041 689
- US-A1- 2004 110 600
- US-A1- 2012 006 139

## Beschreibung

Die vorliegende Erfindung betrifft eine Shift-by-wire Betätigungseinrichtung sowie ein Verfahren zur Auswahl von Fahrstufen eines Kraftfahrzeuggetriebes.

Bei Shift-by-wire Betätigungseinrichtungen erfolgt die Übertragung von Schaltbefehlen von der Betätigungseinrichtung zum Kraftfahrzeuggetriebe im Vergleich zu rein mechanischen Betätigungseinrichtungen mittels elektrischer oder elektronischer Signale. Der Wechsel von der rein mechanischen Betätigungseinrichtung zur elektrischen oder elektronischen Betätigungseinrichtung wurde dadurch veranlasst, dass an Betätigungseinrichtungen für Kraftfahrzeuggetriebe ständig neue konstruktive und ergonomische Anordnungen gestellt wurden, wobei trotz allem eine sichere Bedienbarkeit der Kraftfahrzeuggetriebe-Betätigungseinrichtung gewährleistet bleiben sollte, auch ohne auf die Betätigungseinrichtung bzw. auf das damit einhergehende Betätigungselement blicken zu müssen.

Eine Shift-by-wire Betätigungseinrichtung ist beispielsweise in der Offenlegungsschrift DE 10 2007 037 706 A1 offenbart. Die vorbekannte Betätigungseinrichtung umfasst ein translatorisch bewegbares Schiebeelement zum manuellen Schalten des Kraftfahrzeuggetriebes, wobei das Schiebeelement ein Griffstück aufweist, an welchem ein Rändelrad zur manuellen Auswahl von Fahrstufen des Kraftfahrzeuggetriebes vorgesehen ist. Die translatorische Verschiebeeigenschaft des Schiebeelementes wird dabei für eine Kraftfahrzeug-Automatikgetriebe übliche Tippgasse verwendet, während das an dem Griffstück angeordnete Rändelrad für eine Automatikgasse herhält. Mittels des Rändelrades ist somit eine Auswahl wenigstens der Fahrstufen Vorwärtsfahrt bzw. Drive D, Rückwärtsfahrt R und Leerlauf bzw. Neutralstellung N möglich. Die Fahrstufe Parksperrenstellung P ist über ein zusätzliches Betätigungselement einlegbar.

Die vorbekannte Betätigungseinrichtung umfasst ferner eine Shiftlock-Sperreinrichtung, mittels welcher ein unabsichtliches Auswählen einer der Fahrstufen R und D aus der Parksperrenstellung P heraus verhindert werden soll. Zur Deaktivierung der Parksperre P bzw. zum Auswählen einer der Fahrstufen R und D aus der Parksperrenstellung P ist zunächst eine Betätigung der Bremse sowie eine gleichzeitige Betätigung der Betätigungseinrichtung notwendig. Alternativ dazu ist vorgesehen, die Parksperre nur mittels des zusätzlichen Parksperren-Betätigungselementes zu lösen. Eine gattungsgemäße Shift-by-wire Betätigungseinrichtung ist aus der US 2003/0029261 A1 bekannt.

Ausgehend vom dem gattungsgemäßen Stand der Technik soll mit der vorliegenden Erfindung eine verbesserte Shift-by-wire Betätigungseinrichtung bereitgestellt werden, welche den ständig wachsenden konstruktiven und ergonomischen Anforderungen sowie Sicherheitserfordernissen gerecht wird, indem wenigstens eine unbeabsichtigte Auswahl von Fahrstufen, insbesondere ausgehend von einer anderen Fahrstufe als der Parksperrenstellung zuverlässig verhinderbar ist.

Dazu wird mit der vorliegenden Erfindung eine Shift-by-wire Betätigungseinrichtung mit den Merkmalen des Patentanspruchs 1 vorgeschlagen. Die vorgeschlagene Betätigungseinrichtung ist insbesondere für ein Kraftfahrzeugautomatikgetriebe oder ein Kraftfahrzeugautomatgetriebe vorgesehen. Die vorgeschlagene Betätigungseinrichtung umfasst ein Betätigungsfeld, in welchem wenigstens eine Scrollfläche zur Auswahl einer der Fahrstufen und eine Freigabetaste, welche basierend auf einer Betätigung ein Freigabesignal übermittelt, angeordnet sind. Vorzugsweise sind über die Scrollfläche wenigstens die Fahrstufen Vorwärtsfahrbetrieb D, Neutralstellung N und Rückwärtsfahrbetrieb R auswählbar. Weiter bevorzugt ist über die Scrollfläche zusätzlich die Fahrstufe Parkstellung P auswählbar. Weiterhin bevorzugt ist über die Scrollfläche wenigstens eine andere als die vorbenannten Fahrstufen auswählbar. Ein Betätigungsfeld ist vorzugsweise ein Bereich, welcher sich in einem Zugriffsbereich eines Benutzers der Betätigungseinrichtung befindet und wenigstens durch die in dem Zugriffsbereich sichtbaren Ausmaße der Betätigungseinrichtung begrenzt ist. Vorzugsweise umfasst die Betätigungseinrichtung dazu ein in dem Zugriffsbereich des Benutzers angeordneten Gehäuseabschnitt, dessen Gehäuseoberflächenseite das Betätigungsfeld ausbildet oder beherbergt, wobei ein den zugreifbaren Bereich des Gehäuseabschnitts begrenzender Rand ein maximales Ausmaß des Betätigungsfelds definiert. Ein solcher Rand kann weiter bevorzugt durch den Gehäuseabschnitt der Betätigungseinrichtung selbst ausgebildet oder alternativ durch ein auf der Betätigungseinrichtung anordbares Element, wie beispielsweise eine Mittelkonsolenabdeckung mit einer Aussparung, welche den zugreifbaren Gehäuseabschnitt freigibt, ausgestaltet sein.

Eine Scrollfläche ist vorzugsweise eine bewegliche Bedienfläche, welche vor und zurück bewegbar ist. Vorzugsweise ist die Scrollfläche durch eine Bedienoberfläche eines um eine Drehachse rotierbaren Scrollrades ausgebildet, wobei die Rotierbarkeit des Scrollrades bzw. der Bedienoberfläche vorzugsweise in wenigstens einer Richtung begrenzt oder unbegrenzt ist. Mittels der Drehung des Scrollrades erfolgt die Auswahl der Fahrstufe. Alternativ dazu ist die Scrollfläche vorzugsweise durch eine unbewegliche Bedienfläche, insbesondere eine Berührungssensorfläche ausgebildet, auf welcher ein Bediener der Betätigungseinrichtung zur Auswahl einer Fahrstufe seinen Finger entsprechend einer Scrollbewegung ein oder mehrfach vor oder zurück gleiten muss.

Die Betätigungseinrichtung zeichnet sich dadurch aus, dass die Scrollfläche und die Freigabetaste über eine Sperr- und Freigabeeinrichtung derart miteinander gekoppelt sind, dass jede schaltwirksame Auswahl einer Fahrstufe mittels der Scrollfläche ein Freigabesignal mittels Betätigen der Freigabetaste zur Freigabe durch die Sperr- und Freigabeeinrichtung basierend auf dem Freigabesignal erfordert. Dabei ist die Auswahl dann schaltwirksam, wenn die Auswahl der wenigstens einen Fahrstufe mittels der Scrollfläche ein entsprechendes Schalten des Kraftfahrzeuggetriebes zur Folge hat. Mittels der Betätigungseinrichtung wird im Gegensatz zum vorbekannten Stand der Technik eine schaltwirksame Auswahl wenigstens einer Fahrstufe aus den auswählbaren Fahrstufen bis zum Erhalt eines Freigabesignals gesperrt, wodurch eine unbeabsichtigte Betätigung eines Fahrstufenwahlelements sowie einer damit einhergehenden Auswahl einer anderen als der aktuellen Fahrstufe zuverlässig vermieden werden kann. Denn zur Freigabe der schaltwirksamen Auswahl einer anderen als der bisher ausgewählten Fahrstufe ist im Gegensatz zum Stand der Technik zunächst ein Freigabesignal durch Betätigung einer Freigabetaste erforderlich. Des Weiteren kann mit der vorliegenden Erfindung in Abkehr von üblichen Betätigungseinrichtungen durch eine vollständig andere Ausgestaltung des Wählhebels, insbesondere durch Verzicht auf eine übliche Wählhebelstange, die eine Verbindung eines frei zugänglichen Betätigungselements für den Benutzer zu der Mechanik bzw. Elektronik zur Übertragung der ausgewählten Fahrstufe herstellt, eine kleinere, platzsparende Betätigungseinrichtung bereitgestellt werden.

Gemäß der Erfindung umfasst die Betätigungseinrichtung des Weiteren eine Sensoreinrichtung, welche wenigstens einen Signalgeber und Signalempfänger aufweist. Vorzugsweise können mehr als ein Signalgeber oder ein Signalempfänger vorgesehen sein, wodurch eine Signalgenauigkeit erhöht werden kann. Der Signalgeber ist mit der Scrollfläche derart gekoppelt, dass eine Betätigung der Scrollfläche zu einem eine Information über eine ausgewählte Fahrstufe ausgelöstes Signal des Signalgebers führt. Mittels des Signalgebers und des Signalempfängers kann eine Betätigung der Scrollfläche erfasst und eine aus der Betätigung der Scrollfläche abgeleitete Information über eine ausgewählte Fahrstufe mittels eines Signals übertragen werden.

Als Sensoreinrichtung kann eine übliche elektronische Sensorik Verwendung finden. Beispielsweise kann in Kombination mit dem bevorzugten Scrollrad eine auf Hallsensoren basierende Positionssensorik eingesetzt werden, wobei der Signalgeber, welcher ein Permanentmagnet oder Elektromagnet sein kann, ortsfest mit dem Scrollrad verbunden ist. Alternativ dazu kann in Kombination mit der bevorzugten Berührungssensorfläche eine übliche elektronische Berührungssensorik eingesetzt werden. Dabei sind die auswählbaren Fahrstufen über die Scrollfläche derart festgelegt, dass eine Identifizierung der ausgewählten Fahrstufe in Abhängigkeit einer Betätigung der Scrollfläche möglich ist. Die von der Sensoreinrichtung erfasste und übertragene Information über die ausgewählte Fahrstufe bewirkt ein der ausgewählten Fahrstufe entsprechendes Schalten des Kraftfahrzeuggetriebes. Beispielsweise kann die Information über die ausgewählte Fahrstufe mittels eines Sensorsignals von der Sensoreinrichtung an ein Getriebesteuergerät erfolgen, welches auf Basis der mit dem Sensorsignal übertragenen Information über die ausgewählte Fahrstufe ein entsprechendes Schalten des Kraftfahrzeuggetriebes veranlasst. Alternativ dazu kann zwischen der Sensoreinrichtung und dem Getriebesteuergerät ein weiteres Steuergerät oder eine Auswerteeinheit zwischengeschaltet sein, welches das Sensorsignal bzw. die mit dem Sensorsignal übertragene Information über die ausgewählte Fahrstufe zunächst verarbeitet, beispielsweise auswertet und anschließend weiter übermittelt. Erfindungsgemäß ist die Sperr- und Freigabeeinrichtung zum Sperren und Freigeben einer Übertragung eines Signals mit einer Information über eine ausgewählte Fahrstufe eingerichtet, wobei die Sperr- und Freigabeeinrichtung in einer Übertragungsstrecke, über welche das Signal mit der Information über die ausgewählte Fahrstufe übertragbar ist und welche von der Scrollfläche bis zu dem Kraftfahrzeuggetriebe reicht, zwischengeschaltet ist und die Übertragung der des Signals mit der Information über die ausgewählte Fahrstufe wenigstens bis zum Erhalt des Freigabesignals sperrt.

Die Art und Weise der Signalübertragung kann vielfältig erfolgen und ist für die vorliegende Erfindung nicht wesentlich. Denkbar ist beispielsweise eine elektrische, induktive oder optische Signalübertragung oder eine Kombination daraus mit entsprechenden zwischengeschalteten Schnittstellen.

Die Übertragungsstrecke umfasst vorzugsweise wenigstens Leitungs- und/oder Luftstrecken, über welche jedenfalls eine Übermittlung des Signals mit der Information über die ausgewählte Fahrstufe erfolgt. Beispielsweise ist bei einer hallsensorbasierenden Positionssensorik zwischen dem Signalgeber und dem Signalempfänger eine Luftstrecke vorhanden, über welche eine von dem Signalgeber ausgehende Information über die ausgewählte Fahrstufe mittels eines Signals an den Signalempfänger übertragbar oder von dem Signalempfänger abgreifbar ist. Von dem Signalempfänger bis zu dem Kraftfahrzeuggetriebe kann weiterhin beispielhaft dahingegen eine Signalleitung, beispielsweise eine elektrische Verbindungsleitung als Teil der Übertragungstrecke für die Information über die ausgewählte Fahrstufe in Betracht kommen. Bei der bevorzugten Berührungssensorfläche als Scrollfläche geht die Signalleitung beispielsweise bereits von dem Signalgeber aus. Zusätzlich oder alternativ werden von der Übertragungsstrecke vorzugsweise sämtliche Vorrichtungen bzw. Einrichtungen zwischen der Scrollfläche bis zu dem Kraftfahrzeuggetriebe umfasst, welche das Signal mit der Information über die ausgewählte Fahrstufe verarbeiten wie beispielsweise auswerten, übertragen, durchleiten oder ähnliches. Die Vorrichtung bzw. Einrichtungen können dazu gleichfalls Signalleitungen als Leitungsstrecke zur Übertragung eines Signals mit der Information über die ausgewählte Fahrstufe umfassen oder beherbergen. Die Sperr- und Freigabeeinrichtung ist mit anderen Worten eingerichtet, eine Übertragung eines Signals mit der Information über die ausgewählte Fahrstufe in einem Bereich der Übertragungsstrecke, welche wenigstens eine Luft- und/oder Leitungsstrecke und/oder wenigstens eine Vorrichtung oder Einrichtung umfassen kann, zu sperren und freizugeben. Vorzugsweise kann die Sperr- und Freigabeeinrichtung mittels eines Schaltelements, welches die Leitungsstrecke unterbricht und schließt, eines Abschirmelements, welches in die Luftstrecke einbringbar und herausnehmbar ist und die Übertragung des Signals mit der Information über die ausgewählte Fahrstufe abschirmt oder eines Sperrprogramms für eine der die Vorrichtungen bzw. Einrichtungen steuernden Software ausgebildet sein, welche wenigstens jeweils in Antwort auf das durch eine Betätigung der Freigabetaste ausgelöste Freigabesignal die Übertragung des Signals mit der Information über die ausgewählte Fahrstufe zulassen bzw. freigeben.

Mittels der Betätigungseinrichtung wird im Gegensatz zum vorbekannten Stand der Technik eine Übertragung eines Signals mit einer Information über eine ausgewählte Fahrstufe nach Auswahl der Fahrstufe bis zum Erhalt eines Freigabesignals gesperrt, wodurch eine unbeabsichtigte Betätigung eines Fahrstufenwahlelements sowie einer damit einhergehenden Auswahl einer anderen als der aktuellen Fahrstufe zuverlässig vermieden werden kann. Denn zur Freigabe einer Übertragung eines Signals mit einer Information über die Auswahl einer anderen als der bisher ausgewählten Fahrstufe ist im Gegensatz zum Stand der Technik zunächst eine Betätigung einer Freigabetaste erforderlich ist, wodurch das Freigabesignal abgesetzt und erst darauf basierend eine Übertragung des Signals mit der Information über die ausgewählte Fahrstufe freigegeben bzw. möglich wird. Des Weiteren kann in Abkehr von üblichen Betätigungseinrichtungen durch eine vollständig andere Ausgestaltung des Wählhebels, insbesondere durch Verzicht auf eine übliche Wählhebelstange, die eine Verbindung eines frei zugänglichen Betätigungselements für den Benutzer zu der Mechanik bzw. Elektronik zur Übertragung der ausgewählten Fahrstufe herstellt, eine kleinere, platzsparende Betätigungseinrichtung bereitgestellt werden.

Gemäß der Erfindung ist die Freigabetaste eingerichtet, ansprechend auf eine weitere Betätigung ein Sperrsignal zu übermitteln. Des Weiteren ist die Sperr- und Freigabeeinrichtung eingerichtet, eine Übertragung des Signals mit der Information über die ausgewählte Fahrstufe bei oder nach Erhalt des Sperrsignals bis zum Erhalt eines anschließenden Freigabesignals zu sperren. Im Gegensatz zu der vorbeschriebenen bevorzugten Ausführungsform ist die Freigabetaste während der Fahrstufenauswahl nicht kontinuierlich zu betätigen, um eine Übertragung eines Signals mit einer Information über die ausgewählte Fahrstufe freizugeben. Bei dieser bevorzugten Ausführungsform reicht eine einmalige Betätigung der Freigabetaste aus, um die Betätigungseinrichtung in einen Freigabezustand zu versetzen, bei welcher wenigstens eine Übertragung des Signals mit der Information über die ausgewählte Fahrstufe erfolgt. Erst nach wiederholter bzw. erneuter Betätigung der Freigabetaste wird die Betätigungseinrichtung basierend auf dem von der Freigabetaste abgesetzten Sperrsignal in einen Sperrzustand überführt, bei welcher eine Übertragung des Signals mit der Information über die ausgewählte Fahrstufe gesperrt ist.

Weiter bevorzugt ist die Sperr- und Freigabeeinrichtung eingerichtet, in Ermangelung eines Sperrsignals eine Übertragung des Signals mit der Information über die ausgewählte Fahrstufe nach Ablauf einer vorbestimmten Zeitdauer nach Erhalt des Freigabesignals oder nach Ende einer Betätigung der Scrollfläche zur Auswahl einer der Fahrstufen zu sperren. Somit kann gewährleistet werden, dass die Betätigungseinrichtung nicht versehentlich unbestimmt lange in dem Freigabezustand belassen wird.

Nach einer bevorzugten Ausführungsform umfasst die Sperr- und Freigabeeinrichtung ein bewegliches Sperrelement, welches sich in einem Ausgangszustand in Eingriff mit einem die Scrollfläche ausbildenden Scrollrad zum Sperren einer Drehbewegung des Scrollrades befindet und eingerichtet ist, basierend auf dem Freigabesignal den Eingriff zur Freigabe der Drehbewegung des Scrollrades zu lösen.

Vorzugsweise umfasst die Sperr- und Freigabeeinrichtung einen elektromagnetischen Aktuator mit einem das bewegliche Sperrelement ausbildenden oder tragenden ein- und ausfahrbaren Anker, welcher in einem ausgefahrenen Zustand den Eingriff mit dem Scrollrad zum Sperren der Drehbewegung des Scrollrades herstellt und in einem eingefahrenen Zustand die Drehbewegung des Scrollrades freigibt. Weiter bevorzugt befindet sich der elektromagnetische Aktuator in dem den Sperrzustand gleichkommenden ausgefahrenen Zustand in einem stromlosen Zustand und in dem den Freigabezustand gleichkommenden eingefahrenen Zustand in einem bestromten Zustand, welcher basierend auf der Betätigung der Freigabetaste initiiert wird. Ein Energieaufwand der Betätigungseinrichtung kann im Vergleich zu einer umgekehrten Auslegung des elektromagnetischen Aktuators gering gehalten werden. Die Steuerung des elektromagnetischen Aktuators kann vorzugsweise über eine Steuereinrichtung erfolgen, die mit der Freigabetaste und dem elektromagnetischen Aktuator gekoppelt ist. Alternativ dazu kann die Freigabetaste als Druckschalter ausgebildet sein, der bei Betätigung einen den elektromagnetischen Aktuator bestromenden Schaltkreis schließt und bei Nicht-Betätigung den Schaltkreis öffnet, wodurch der elektromagnetische Aktuator stromlos wird.

Alternativ dazu umfasst die Sperr- und Freigabeeinrichtung vorzugsweise eine von der Freigabetaste bis zu dem beweglichen Sperrelement reichende Mechanik, welche bei Betätigen der Freigabetaste das bewegliche Sperrelement in den eingriffslosen, einem Freigabezustand gleichkommenden Zustand und bei Nicht-Betätigen bzw. Loslassen der Freigabetaste automatisch in den Eingriffszustand verbringt. Dadurch kann eine kostengünstigere Betätigungseinrichtung beigestellt werden.

Gemäß einer bevorzugten Ausführungsform der vorliegenden Erfindung ist das Scrollrad monostabil oder multistabil ausgelegt. Unter monostabil wird im Sinne der vorliegenden Erfindung eine solche Auslegung des Scrollrades verstanden, dass das Scrollrad zwischen zwei Endpositionen mit einer dazwischen liegenden Ruheposition bewegbar ist, wobei sich das Scrollrad nach Erreichen einer Endposition selbständig in die Ruheposition zurückstellt. Den jeweiligen Endpositionen ist abhängig von einer ausgewählten Ausgangsfahrstufe eine der Reihenfolge nach benachbarte nächste Fahrstufe zugeordnet. Beispielsweise kann die vorbestimmte Reihenfolge der Fahrstufen P, R, N, D sein, wobei die zuletzt ausgewählte Ausgangsfahrstufe die Fahrstufe N ist und den jeweiligen Endpositionen, welche in entgegengesetzter Drehrichtung des Scrollrades vorgesehen sind, die der Ausgangsfahrstufe N gemäß der vorgenannten Rangreihenfolge benachbarte Fahrstufen R bzw. D sind. Dies ermöglicht ein einfaches Hoch- bzw. Runterschalten des Kraftfahrzeuggetriebes. Dazu weist die Betätigungseinrichtung eine Steuereinrichtung auf oder ist mit einer solchen gekoppelt, welche den jeweiligen Endpositionen des Scrollrades automatisch eine zu der zuletzt ausgewählten Fahrstufe unmittelbar gemäß einer festgelegten Reihenfolge der Fahrstufen nachfolgende Fahrstufe zuordnet.

Bei der bevorzugten multistabilen Auslegung des Scrollrades weist die Betätigungseinrichtung eine mit dem Scrollrad gekoppelte Rastiereinrichtung auf, welche eine der auswählbaren Fahrstufen entsprechende Anzahl an Rastpositionen für das Scrollrad bereitstellt. Vorzugsweise ist das Scrollrad unbegrenzt in wenigstens einer der beiden entgegengesetzten Drehrichtungen rotierbar. Bei der Rastiereinrichtung kann es sich um eine übliche, mit shift-by-wire Betätigungseinrichtungen ausgestattete Rastiereinrichtung handeln.

Die mono- bzw. multistabile Auslegung des Scrollrades ermöglicht ein haptisches Feedback für den Benutzer bei der Auswahl der entsprechenden Fahrstufe.

Gemäß der vorliegenden Erfindung sind die Scrollfläche und die Freigabetaste derart angeordnet, dass eine insbesondere gleichzeitige Betätigung dieser beiden Komponenten mittels nur einer Hand eines Benutzers möglich ist. Damit kann die vorgeschlagene Betätigungseinrichtung auf einfache Art und Weise bedient werden. Nach einer bevorzugten Ausführungsform ist die Freigabetaste zur Betätigung durch den Daumen und die Scrollfläche zur Betätigung durch einen anderen Finger, weiter bevorzugt durch den Zeige- oder Mittelfinger vorgesehen. Die Bedienbarkeit der Betätigungseinrichtung kann dadurch weiter vereinfacht werden.

Gemäß einer bevorzugten Ausführungsform umfasst das Betätigungsfeld einer Handballenauflage, welche die Freigabetaste aufweist oder ausbildet. Vorzugsweise ist die Freigabetaste in einer Aussparung der Handballenauflage oder auf einer Oberfläche der Handballenauflage angeordnet. Weiterhin bevorzugt kann die Handballenauflage vorzugsweise eine Sensorfläche umfassen, welche bei Berührung durch den Benutzer das entsprechende Freigabesignal absetzt. Alternativ dazu bildet die Handballenauflage selbst die Freigabetaste aus. Weiter bevorzugt ist dazu die Handballenauflage an sich als Drucktastenelement ausgebildet.

Nach einer bevorzugten Ausführungsform ist die Freigabetaste durch einen Fingerprint-Sensor zur Identifizierung eines Benutzers der Betätigungseinrichtung ausgebildet, wobei die Freigabetaste mit einer Identifizierungseinrichtung gekoppelt ist, welche einen Abgleich eines über die Freigabetaste erfassten Fingerabdrucks mit einem in der Identifizierungseinrichtung abgelegten bzw. gespeicherten Fingerabdruck durchführt und bei Übereinstimmung ein Signal an die Sperr- und Freigabeeinrichtung zur Freigabe der Übertragung des Signals mit der Information über die ausgewählte Fahrstufe durch die Sperr- und Freigabeeinrichtung absetzt. Im Sinne der vorliegenden Erfindung entspricht der von der Freigabetaste an die Identifizierungseinrichtung übermittelte Fingerabdruck bereits einem Freigabesignal, sofern der erfasste Fingerabdruck mit dem abgelegten Fingerabdruck übereinstimmt. Dadurch kann ein Schalten des Kraftfahrzeuggetriebes durch einen unbefugten Benutzer verhindert werden, wodurch die Betätigungseinrichtung in Kombination mit einer Kraftfahrzeugdiebstahlsicherung verwendbar ist.

Gemäß einer bevorzugten Ausführungsform umfasst die Betätigungseinrichtung eine Anzeigeeinrichtung zur Anzeige wenigstens der ausgewählten Fahrstufe. Weiter bevorzugt ist die Anzeigeeinrichtung zusätzlich zur Anzeige der auswählbaren Fahrstufen eingerichtet, wobei die aktuell ausgewählte Fahrstufe gegenüber den auswählbaren Fahrstufen farblich oder in der Helligkeitsintensität abgesetzt ist. Weiter bevorzugt ist die Anzeigeeinrichtung in dem Betätigungsfeld angeordnet. Die Anzeigeeinrichtung ist unmittelbar oder mittelbar mit der Sperr- und Freigabeeinrichtung derart verbunden, dass eine Information über die ausgewählte Fahrstufe über die Anzeigeeinrichtung darstellbar ist. Eine unmittelbare Verbindung mit der Sperr- und Freigabeeinrichtung bedingt eine Verbindung ohne weitere zwischengeschaltete Einrichtungen oder Vorrichtungen. Eine mittelbare Verbindung bedingt wenigstens eine zwischengeschaltete Vorrichtung oder Einrichtung wie beispielsweise eine Steuereinrichtung, welche ein Signal mit der Information über die ausgewählte Fahrstufe verarbeitet.

Nach einem weiteren Aspekt der vorliegenden Erfindung wird im Patentanspruch 10 ein Verfahren zur Auswahl von Fahrstufen eines Kraftfahrzeuggetriebes mittels einer Shift-by-wire Betätigungseinrichtung der vorbeschriebenen Art bereitgestellt. Das vorgeschlagene Verfahren umfasst einen Schritt des Betätigens einer Freigabetaste zum Absetzen wenigstens eines Freigabesignals zur Freigabe einer Übertragung eines Signals mit einer Information über eine ausgewählte Fahrstufe basierend auf einer Betätigung einer Scrollfläche, mittels welchem eine Auswahl einer der Fahrstufen in Abhängigkeit seiner Betätigung durchführbar ist. Weiterhin umfasst das Verfahren einen Schritt des Auswählens einer Fahrstufe durch Betätigen der Scrollfläche. Vorzugsweise umfasst das Verfahren des Weiteren einen Schritt des Übertragens des Signals mit einer Information über die ausgewählte Fahrstufe nach Auswahl der Fahrstufe. Weiter bevorzugt umfasst das Verfahren einen nachfolgenden Schritt des Sperrens einer Übertragung eines Signals mit einer Information über eine ausgewählte Fahrstufe bis zum Erhalt eines Freigabesignals. Mit dem Verfahren kann zuverlässig ein unbeabsichtigtes, schaltwirksames Auswählen einer der Fahrstufen durch eine unbeabsichtigte Betätigung der Scrollfläche vermieden werden.

Weitere Merkmale und Vorteile der Erfindung ergeben sich aus der nachfolgenden Beschreibung von bevorzugten Ausführungsbeispielen der Erfindung, anhand der Figuren und Zeichnungen, die erfindungswesentliche Einzelheiten zeigen, und aus den Patentansprüchen. Die einzelnen Merkmale können je einzeln für sich oder zu mehreren in beliebiger Kombination bei einer bevorzugten Ausführungsform der Erfindung verwirklicht sein.

Bevorzugte Ausführungsbeispiele der Erfindung werden nachfolgend anhand der beigefügten Zeichnungen näher erläutert. Es zeigen:
- Fig. 1: eine perspektivische Draufsicht einer Betätigungseinrichtung nach einem bevorzugten Ausführungsbeispiel;
- Fig. 2: eine Seitenansicht der in Figur 1 gezeigten Betätigungseinrichtung;
- Fig. 3: ein Ablaufdiagramm eines Verfahrens zur Auswahl von Fahrstufen eines Kraftfahrzeuggetriebes mittels einer Shift-by-wire Betätigungseinrichtung nach einem bevorzugten Ausführungsbeispiel.

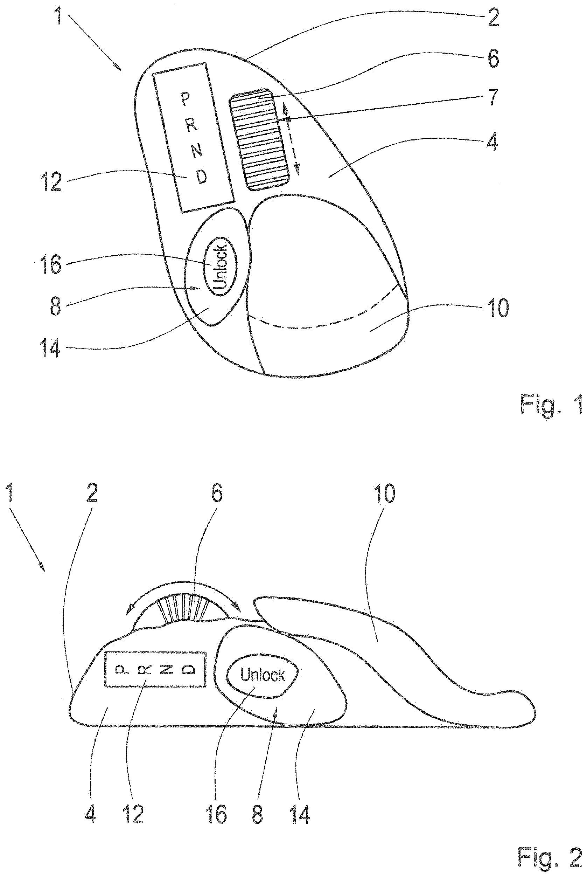

Fig. 1 zeigt eine perspektivische Draufsicht einer Shift-by-wire Betätigungseinrichtung 1 nach einem bevorzugten Ausführungsbeispiel. Die Betätigungseinrichtung 1 umfasst ein Gehäuse 2, welches in einer Mittelkonsole eines Kraftfahrzeuges einsetzbar oder auf einer solchen anordbar ist. Das Gehäuse 2 kann aus einem oder mehreren Gehäuseelementen zusammengesetzt sein. Das Gehäuse 2 weist ein Betätigungsfeld 4 auf, welches zu einem sichtbaren Bereich des Gehäuses 2 in einem eingebauten Zustand in der Mittelkonsole korrespondiert. In dem Betätigungsfeld 4 sind ein Scrollrad 7 mit einer Scrollfläche 6, eine Freigabetaste 8, eine Handballenauflage 10 sowie eine Anzeigeeinrichtung 12 zur Anzeige einer auswählbaren und einer ausgewählten Fahrstufe eines Kraftfahrzeuggetriebes angeordnet. Das Scrollrad 7 mit der Scrollfläche 6 ist in entgegengesetzten Drehrichtungen rotierbar. Das Scrollrad 7 kann monostabil oder multistabil ausgelegt sein. Bei einer monostabilen Ausgestaltung des Scrollrades 7 ist dieses in jede der Drehrichtungen bis zu einem spürbaren Endanschlag rotierbar. Der Rotationsweg ist durch entsprechende Anpassung des Rotationswinkel bzw. Drehwinkels eingestellt. Die Einstellung kann im Vorwege oder auch während des Betriebs mittels einer elektronischen Einheit erfolgen, um einen bedarfsgerechten Drehweg für das Scrollrad 7 bzw. die Scrollfläche 6 bereitstellen zu können. Der Drehweg der Scrollfläche 6 in jede der entgegengesetzten Drehrichtungen kann dabei identisch oder unterschiedlich sein. Die Scrollfläche 6 bzw. das Scrollrad 7 ist ferner ausgestaltet, automatisch in seine Ausgangsstellung zurückzudrehen, sobald es aus der Ausgangsstellung verbracht wird.

Bei einer multistabilen Ausgestaltung des Scrollrades 7 ist dieses in mehrere Rastpositionen in jeweils entgegengesetzten Drehrichtungen drehbar, wobei das Scrollrad 7 entweder unbegrenzt frei rotierbar oder nach Erreichen einer gemäß einer Fahrstufenreihenfolge äußersten Fahrstufe in eine Endposition gelangt. Das Scrollrad 7 ist mit einer nicht dargestellten Sensoreinrichtung zur Erkennung einer Drehbewegung des Scrollrades 7 bzw. der Scrollfläche 6 gekoppelt. Die Erkennung der Drehbewegung des Scrollrades 7 bzw. der Scrollfläche 6 kann auf übliche Weise optisch, magnetisch, insbesondere hallsensorbasierend oder auf andere üblich bekannte Weise erfolgen. Dabei ist ein vorbestimmter Drehweg des Scrollrades 7 bzw. der Scrollfläche 6 jeweils einer auswählbaren Fahrstufe zugeordnet. Das Scrollrad 7 kann dadurch beispielsweise eine der Fahrstufen Parkstellung P, Rückwärtsfahrbetrieb R, Neutralstellung N oder Drive bzw. Vorwärtsfahrbetrieb D auswählen. Die Fahrstufe Parkstellung P ist nicht zwingend mittels einer Betätigung der Scrollfläche 6 bzw. des Scrollrades 7 auswählbar. Die Parkstellung P kann beispielsweise mittels eines zusätzlichen Betätigungselementes aktivier- und/oder deaktivierbar sein.

Um eine Auswahl der ausgewählten Fahrstufe über die Scrollfläche 7 dem Benutzer anzuzeigen, weist die Betätigungseinrichtung 1 in dem Betätigungsfeld 4 eine Anzeigeeinrichtung 12 auf. Die Anzeigeeinrichtung 12 zeigt zum einen die auswählbaren Fahrstufen sowie zum anderen durch farbliche Absetzung zu den übrigen Fahrstufen die über die Scrollfläche 6 ausgewählte aktuelle Fahrstufe an. Die Anzeigeeinrichtung 12 kann dabei eine durch Leuchtmittel angestrahlte Displayeinheit sein, beispielsweise eine LED-Anzeige oder ein programmierbares Display, mittels welcher eine variable, bedarfsgerechte Anpassung des Displays möglich ist. Die Anzeigeeinrichtung 12 muss nicht zwangsweise in dem Betätigungsfeld 4 angeordnet sein. Beispielsweise kann die Anzeigeeinrichtung 12 nach einem weiteren bevorzugten Ausführungsbeispiel in einer Armatur im Sichtfeld eines Kraftfahrzeugführers vorgesehen sein. Eine zusätzliche Anordnung einer Anzeigeeinrichtung zur Anzeige der auswählbaren und ausgewählten Fahrstufe ist zu der Anzeigeeinrichtung 12 ebenfalls denkbar.

Die Handballenauflage 10 ist derart angeordnet und in den Ausmaßen festgelegt, dass ein Benutzer der Betätigungseinrichtung seine Hand bzw. seinen Handballen bequem auf der Handballenauflage 10 ablegen und die Betätigungselemente in der Betätigungsfläche 4, also wenigstens die Scrollfläche 6 und die Freigabetaste 8 mit seinen Fingern erreichen und betätigen kann. Vorzugsweise ist die Handballenauflage 10 als auswechselbares Modul für die Betätigungseinrichtung 1 vorgesehen, um eine der Größe einer Hand eines Benutzers angepasste Handballenauflage mit der Betätigungseinrichtung 1 bereitstellen zu können.

Die Scrollfläche 6 und die Freigabetaste 8 sind in dem Betätigungsfeld 4 derart angeordnet, dass die Freigabetaste 8 mittels eines Daumens einer Hand des Benutzers und die Scrollfläche 6 mittels eines Zeige- oder Mittelfingers der Hand des Benutzers betätigbar sind. Die Freigabetaste 8 weist eine der Daumenfläche entsprechend ausgestaltete Mulde 14 auf, um ein angenehmes Betätigungsgefühl und eine angenehme Ablage des Daumens auf der Freigabetaste zu ermöglichen. Im Bereich der Mulde 14 ist ein signalauslösendes Tastenelement 16 zur Betätigung durch den Daumen angeordnet. Bei dem Tastenelement 16 kann es sich beispielsweise um eine Drucktaste oder eine Sensortaste handeln. Bei Betätigen des Tastenelements 16 wird ein Freigabesignal durch die Freigabetaste 8 an eine Sperr- und Freigabeeinrichtung, welche nicht dargestellt ist, abgesetzt.

Nach einem bevorzugten Ausführungsbeispiel weist die Sperr- und Freigabeeinrichtung einen elektrischen Antrieb mit einem ein- und ausfahrbaren Anker auf. Bei dem elektrischen Antrieb kann es sich beispielsweise um einen elektromagnetischen Aktuator handeln. Der Anker ist in einem stromlosen Zustand des elektrischen Antriebs ausgefahren und befindet sich in dem ausgefahrenen Zustand in Eingriff mit dem Scrollrad 7 zum Sperren einer Drehbewegung desselbigen. Dazu weist das Scrollrad 7 wenigstens einen Eingriff für den Anker auf. Beispielsweise kann für jede mit dem Scrollrad 7 auswählbare Fahrstufe ein Eingriff vorgesehen sein, in welchem der Anker nach Auswahl einer Fahrstufe eingreifen kann, um die Drehbewegung des Scrollrades 7 zu unterbinden. In einem bestromten Zustand des elektrischen Antriebs ist der Anker eingefahren und gibt die Drehbewegung des Scrollrades 7 frei. Der eingefahrene Zustand des Ankers wird mittels Betätigung der Freigabetaste 8 bzw. des Freigabesignals veranlasst. Die Freigabetaste 8 ist mit der Sperr- und Freigabeeinrichtung derart gekoppelt, dass basierend auf dem von der Freigabetaste 8 nach Betätigung abgegebenen Freigabesignal ein Stromkreis des elektrischen Antriebs zur Bestromung desselbigen geschlossen wird. Beispielsweise kann die Freigabetaste 8 als Schalter ausgestaltet sein, der unmittelbar mit dem Stromkreis des elektrischen Antriebs verbunden ist. Dabei bildet die Freigabetaste 8 gleichzeitig die Sperr- und Freigabeeinrichtung aus. Während einer Betätigung der Freigabetaste 8 wird somit der Stromkreis geschlossen, wohingegen ein Loslassen der Freigabetaste 8 bzw. eine Nicht-Betätigung zu einem stromlosen Zustand des elektrischen Antriebs führt.

Alternativ dazu kann die Sperr- und Freigabeeinrichtung eine Mechanik aufweisen, welche ein dem Anker äquivalentes Sperrelement in einen einen Sperrzustand gleichkommenden Eingriffs- und in einen einen Freigabezustand gleichkommenden Nichteingriffszustand basierend auf einer Betätigung der Freigabetaste 8 verbringen kann. Beispielsweise kann eine mit dem Sperrelement verbundene Zahnradmechanik oder ein mit dem Sperrelement verbundenes Gestänge oder eine Kombination daraus vorgesehen sein. Die Freigabetaste 8 kann dabei als Drucktaste ausgestaltet sein, deren Betätigung unmittelbar durch Kraftübertragung der auf die Freigabetaste 8 einwirkenden Betätigungskraft auf die Mechanik derart wirkt, dass das Sperrelement aus dem Sperrzustand in den Freigabezustand und bei Nicht-Betätigung wieder in den Sperrzustand verbringbar ist.

Weiterhin alternativ kann die Freigabetaste 8 als Sensor- bzw. Berührungstaste ausgestaltet sein, welche mit einer Steuereinrichtung, welche Bestandteil der Sperr- und Freigabeeinrichtung sein kann, verbunden ist. Basierend auf einer Betätigung der Freigabetaste 8 übermittelt die Steuereinrichtung ein den Stromkreis des elektrischen Antriebs schließendes oder öffnendes Signal an einen in dem Stromkreis angeordneten Schalter, welcher Bestandteil der Sperr- und Freigabeeinrichtung ist.

Im Allgemeinen ist die nicht-dargestellte Sperr- und Freigabeeinrichtung mit der Scrollfläche 6 bzw. dem Scrollrad 7 oder alternativ mit einer nicht-dargestellten Sensoreinrichtung derart gekoppelt, dass wenigstens eine schaltwirksame Übertragung eines Signals mit einer Information über die ausgewählte Fahrstufe bis zum Erhalt des Freigabesignals gesperrt ist.

Bei der Sensoreinrichtung handelt es sich nach einem bevorzugten Ausführungsbeispiel um eine Hallsensor basierte Positionssensorik mit einem Permanent- oder Elektromagneten als Signalgeber, der mit der Scrollfläche 6 bzw. dem Scrollrad 7 gekoppelt ist, und einen oder mehrere Hallsensoren als Signalempfänger, der oder die beispielsweise ortsfest mit dem Gehäuse 2 verbunden sind. Der Signalgeber ist ortsfest mit dem Scrollrad 7 verbunden und wird über eine Drehbewegung des Scrollrades 7 zwangsbewegt. Der Signalgeber ist mit dem Signalempfänger derart aufeinander abgestimmt, dass eine vorbestimmte Magnetfeldänderung durch Drehbewegung des Signalgebers einer vorbestimmt auswählbaren Fahrstufe entspricht. Der Signalempfänger übermittelt bei Drehbewegung des Scrollrades 7 ein die erfasste Magnetfeldänderung entsprechendes Signal, wobei die Magnetfeldänderung zu einer Information über die ausgewählte Fahrstufe korrespondiert. Das von der Sensoreinrichtung übermittelte Signal kann von einer Steuereinrichtung ausgewertet werden, welche basierend auf der mit dem Signal übertragenen Information über die ausgewählte Fahrstufe ein Schalten des Kraftfahrzeuggetriebes veranlasst.

Weiterhin ist nach einem bevorzugten Ausführungsbeispiel die Sperr- und Freigabeeinrichtung mit einem Schaltkreis eines den Signalgeber ausbildenden Elektromagneten verbunden, der mit der Scrollfläche 6 bzw. dem Scrollrad 7 gekoppelt ist. Die elektrische Anbindung des Elektromagneten als Signalgeber in oder an dem Scrollrad 7 oder der Scrollfläche 6 ist beispielsweise über einen Schleifkontakt in einer Lagerstelle des Scrollrades 7 sichergestellt. Basierend auf einer Betätigung und des damit einhergehenden Freigabesignals der Freigabetaste 8 wird der Stromkreis geschlossen, wodurch ein Zusammenwirken zwischen dem Signalgeber und dem Signalempfänger zur Identifizierung einer ausgewählten Fahrstufe basierend auf einer Magnetfeldänderung und eines darauf basierend abgegebenen Signals mit der Information über die ausgewählte Fahrstufe ermöglicht wird.

Das Freigabesignal wird nach einem bevorzugten Ausführungsbeispiel für einen den Zeitraum der Betätigung entsprechende Dauer oder nach Betätigen der Freigabetaste 8 übertragen. Nach einem weiteren bevorzugten Ausführungsbeispiel ist die Sperr- und Freigabeeinrichtung eingerichtet, ansprechend auf eine weitere Betätigung der Freigabetaste 8, welche einer Betätigung zum Auslösen des Freigabesignals folgt, ein Sperrsignal zum Sperren der Übertragung des Signals mit der Information über die ausgewählte Fahrstufe bis zum Erhalt eines weiteren Freigabesignals zu übertragen. Weiter bevorzugt ist die Sperr- und Freigabeeinrichtung eingerichtet, in Ermangelung eines solchen Sperrsignals, die Übertragung des Signals mit der Information über die ausgewählte Fahrstufe nach einem vorbestimmten Zeitablauf nach Erhalt des Freigabesignals zu sperren. Damit kann zuverlässig gewährleistet werden, dass ein unbeabsichtigtes Drehen der Scrollfläche 6 nach Ablauf einer vorbestimmten Zeit nicht zu einer schaltwirksamen Signalübertragung einhergehend mit einem Schalten des Kraftfahrzeuggetriebes erfolgt.

Figur 2 zeigt eine Seitenansicht der mit Figur 1 gezeigten Betätigungseinrichtung 1. Figur 2 verdeutlicht eine annähernde computermausartige Form der Betätigungseinrichtung 1, welche eine bequeme Ablage einer Benutzerhand auf der Handballenauflage 10 sowie eine einfache und bequeme Bedienung der Betätigungseinrichtung 1 ermöglicht. Ferner können die nicht dargestellte Sensoreinrichtung sowie die Sperr- und Freigabeeinrichtung platzsparend in dem Bereich unterhalb des Betätigungsfeldes 4 bzw. auf einer der dem Betätigungsfeld 4 abgewandten Seite des Gehäuses 2 oder innerhalb des Gehäuses 2 angeordnet werden.

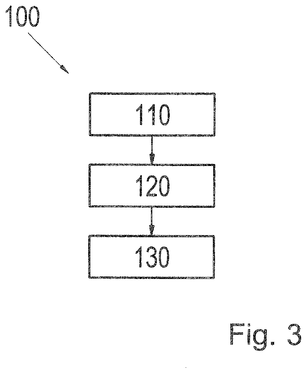

Figur 3 zeigt ein Ablaufdiagramm eines Verfahrens zur Auswahl von Fahrstufen eines Kraftfahrzeuggetriebes mittels einer Shift-by-wire Betätigungseinrichtung nach einem bevorzugten Ausführungsbeispiel. Das Verfahren wird im Folgenden anhand der vorbeschriebenen Betätigungseinrichtung 1 dargestellt. Ausgehend von einem Sperrzustand, bei welchem eine Übertragung eines Signals über eine auswählbare Fahrstufe durch die Sperr- und Freigabeeinrichtung unterbunden ist, wird in einem ersten Schritt 110 die Freigabetaste 8 betätigt, um ein Freigabesignal auszulösen, dass die Freigabe einer Übertragung eines Signals mit einer Information über eine ausgewählte Fahrstufe in Richtung des Kraftfahrzeuggetriebes bewirkt. Die Sperr- und Freigabeeinrichtung hebt die Sperre basierend auf der Betätigung der Freigabetaste 8 und des damit einhergehenden Freigabesignals auf und lässt eine Übertragung eines Signals mit einer Information über eine ausgewählte Fahrstufe zu. In einem weiteren Schritt 120 erfolgt die Auswahl der gewünschten Fahrstufe durch Betätigen der Scrollfläche 6, wodurch ein Signal mit der Information über die ausgewählte Fahrstufe in Richtung des Kraftfahrzeuggetriebes abgegeben wird, um ein entsprechendes Schalten des Kraftfahrzeuggetriebes zu veranlassen. Anschließend wird in einem Schritt 130 die Übertragung eines Signals mit einer Information über eine ausgewählte Fahrstufe wieder gesperrt. Dies kann je nach Ausgestaltung der Betätigungseinrichtung 1 beispielsweise durch Öffnen eines Stromkreises, der zur Stromversorgung eines elektrischen Antriebs zum Sperren einer Drehbewegung der Scrollfläche 6 oder des Scrollrades 7 oder eines Elektromagneten vorgesehen ist, der als Signalgeber mit der Scrollfläche 6 oder dem Scrollrad 7 ortsfest gekoppelt ist, oder auf eine andere aus den vorbeschriebenen bevorzugten Ausführungsbeispielen ableitbaren Weise erfolgen. Mittels des Verfahrens 100 kann eine unbeabsichtigte schaltwirksame Auswahl einer Fahrstufe durch unbeabsichtigtes Betätigen der Scrollfläche verhindert werden.

Die beschriebenen und in den Figuren gezeigten bevorzugten Ausführungsbeispiele sind nur beispielhaft gewählt. Unterschiedliche Ausführungsbeispiele können vollständig und in Bezug auf einzelne Merkmale miteinander kombiniert werden. Auch kann ein Ausführungsbeispiel durch ein oder mehrere Merkmale eines weiteren Ausführungsbeispiels ergänzt werden. Die Abmessungen der geometrischen Form der beschriebenen Elemente sind nur beispielhaft und können entsprechend angepasst werden.

### Bezugszeichen

- 1: Betätigungseinrichtung
- 2: Gehäuse
- 4: Betätigungsfeld
- 6: Scrollfläche
- 7: Scrollrad
- 8: Freigabetaste
- 10: Handballenauflage
- 12: Anzeigeeinrichtung
- 14: Mulde
- 16: Tastenelement
- 100: Verfahren
- 110: Betätigungsschritt
- 120: Drehschritt
- 130: Sperrschritt

## Patentansprüche

1. Shift-by-wire Betätigungseinrichtung (1) zur Auswahl von Fahrstufen eines Kraftfahrzeuggetriebes, wobei die Betätigungseinrichtung (1) umfasst
ein Betätigungsfeld (4), in welchem eine Scrollfläche (6) zur Auswahl einer der Fahrstufen und eine Freigabetaste (8), welche basierend auf einer Betätigung ein Freigabesignal übermittelt, angeordnet sind, wobei die Scrollfläche (6) und die Freigabetaste (8) über eine Sperr- und Freigabeeinrichtung derart gekoppelt sind, dass jede schaltwirksame Auswahl einer Fahrstufe mittels der Scrollfläche (6) ein Freigabesignal mittels Betätigen der Freigabetaste (8) zur Freigabe durch die Sperr- und Freigabeeinrichtung basierend auf dem Freigabesignal erfordert; und
eine Sensoreinrichtung, welche wenigstens einen Signalgeber und Signalempfänger umfasst, wobei der Signalgeber mit der Scrollfläche (6) gekoppelt ist und mit dem Signalempfänger zum Erfassen einer Betätigung der Scrollfläche (6) und zum Übertragen eines Signals mit einer aus der Betätigung der Scrollfläche (6) abgeleiteten Information über eine ausgewählte Fahrstufe zusammenwirkt, wobei das Signal mit der Information über die ausgewählte Fahrstufe ein der ausgewählten Fahrstufe entsprechendes Schalten des Kraftfahrzeuggetriebes bewirkt,
wobei die Sperr- und Freigabeeinrichtung zum Sperren und Freigeben der Übertragung des Signals mit der Information über die ausgewählte Fahrstufe eingerichtet ist, wobei die Sperr- und Freigabeeinrichtung in einer Übertragungsstrecke, über welche das Signal mit der Information über die ausgewählte Fahrstufe übertragbar ist und welche von der Scrolffläche (6) bis zu dem Kraftfahrzeuggetriebe reicht, zwischengeschaltet ist und die Übertragung des Signals mit der Information über die ausgewählte Fahrstufe wenigstens bis zum Erhalt des Freigabesignals sperrt;
**dadurch gekennzeichnet, dass**
die Freigabetaste (8) eingerichtet ist, ansprechend auf eine weitere Betätigung ein Sperrsignal zu übermitteln, und
die Sperr- und Freigabeeinrichtung eingerichtet ist, die Übertragung des Signals mit der Information über die ausgewählte Fahrstufe bei oder nach Erhalt des Sperrsignals bis zum Erhalt eines weiteren Freigabesignals zu sperren.

2. Betätigungseinrichtung (1) nach Anspruch 1, **dadurch gekennzeichnet, dass** die Sperr- und Freigabeeinrichtung eingerichtet ist, in Ermangelung des Sperrsignals die Übertragung des Signals mit der Information über die ausgewählte Fahrstufe nach Ablauf einer vorbestimmten Zeitdauer nach Erhalt des Freigabesignals zu sperren.

3. Betätigungseinrichtung (1) nach Anspruch 1 oder 2, **dadurch gekennzeichnet, dass** die Sperr- und Freigabeeinrichtung ein bewegliches Sperrelement umfasst, welches sich in einem Ausgangszustand in Eingriff mit einem die Scrollfläche (6) ausbildenden Scrollrad (7) zur Sperrung einer Drehbewegung des Scrollrades (7) befindet und eingerichtet ist, basierend auf dem Freigabesignal den Eingriff zur Freigabe der Drehbewegung des Scrollrades (7) zu lösen.

4. Betätigungseinrichtung (1) nach einem der vorherigen Ansprüche, **dadurch gekennzeichnet, dass** die Freigabetaste (8) zur Betätigung durch einen Daumen und die Scrollfläche (6) zur Betätigung durch einen anderen Finger einer Benutzerhand in dem Betätigungsfeld (4) angeordnet sind.

5. Betätigungseinrichtung (1) nach einem der vorherigen Ansprüche, **dadurch gekennzeichnet, dass** das Betätigungsfeld (4) eine Handballenauflage (10) umfasst, welche die Freigabetaste (8) aufweist oder ausbildet.

6. Betätigungseinrichtung (1) nach einem der vorherigen Ansprüche, **dadurch gekennzeichnet, dass** die Freigabetaste (8) durch einen Fingerprint-Sensor zur Identifizierung eines Benutzers der Betätigungseinrichtung (1) ausgebildet ist, wobei die Freigabetaste (8) mit einer Identifizierungseinrichtung gekoppelt ist, welche einen Abgleich eines über die Freigabetaste (8) erfassten Fingerabdrucks mit einem in der Identifizierungseinrichtung abgelegten Fingerabdruck durchführt und bei Übereinstimmung ein Signal an die Sperr- und Freigabeeinrichtung zur Freigabe der Übertragung des Signals mit der Information über die ausgewählte Fahrstufe durch die Sperr- und Freigabeeinrichtung absetzt.

7. Verfahren (100) zur Auswahl von Fahrstufen eines Kraftfahrzeuggetriebes mittels einer Shift-by-wire Betätigungseinrichtung nach einem der vorherigen Ansprüche, wobei das Verfahren (100) umfasst einen Schritt (110) des Betätigens der Freigabetaste zur Freigabe wenigstens der Übertragung der Information über eine ausgewählte Fahrstufe basierend auf der Betätigung der Scrollfläche, mittels welcher die Auswahl einer der Fahrstufen in Abhängigkeit ihrer Betätigung erfolgt, und einen Schritt (120) des Auswählens der Fahrstufe durch Betätigen der Scrollfläche.

## Claims

1. Shift-by-wire operating device (1) for selecting drive settings of a motor vehicle transmission, wherein the operating device (1) comprises
an operating field (4) in which a scroll area (6) for selecting one of the drive settings and an enable button (8), which transmits an enable signal based on operation, are arranged, wherein the scroll area (6) and the enable button (8) are coupled by means of a blocking and enable device in such a way that each shifting selection of a drive setting by means of the scroll area (6) requires an enable signal by means of operation of the enable button (8) for enabling by the blocking and enable device based on the enable signal;
and
a sensor device which comprises at least one signal transmitter and signal receiver, wherein the signal transmitter is coupled to the scroll area (6) and interacts with the signal receiver for the purpose of detecting operation of the scroll area (6) and for the purpose of transmitting a signal containing an item of information about a selected drive setting derived from operation of the scroll area (6), wherein the signal containing the information about the selected drive setting causes shifting of the motor vehicle transmission, which shifting corresponds to the selected drive setting,
wherein the blocking and enable device is designed to block and enable the transmission of the signal containing the information about the selected drive setting, wherein the blocking and enable device is interposed in a transmission section by means of which the signal containing the information about the selected drive setting can be transmitted and which extends from the scroll area (6) as far as the motor vehicle transmission, and blocks the transmission of the signal containing the information about the selected drive setting at least until the enable signal is received,
**characterized in that**
the enable button (8) is designed to transmit a blocking signal in response to a further operation, and the blocking and enable device is designed to block the transmission of the signal containing the information about the selected drive setting when or after the blocking signal is received, until a further enable signal is received.

2. Operating device (1) according to Claim 1, **characterized in that** the blocking and enable device is designed, in the absence of the blocking signal, to block the transmission of the signal containing the information about the selected drive setting after a predetermined time period has elapsed after the enable signal has been received.

3. Operating device (1) according to Claim 1 or 2, **characterized in that** the blocking and enable device comprises a moving blocking element which, in an initial state, is in engagement with a scroll wheel (7), which forms the scroll area (6), for the purpose of blocking a rotary movement of the scroll wheel (7) and is designed to release the engagement for the purpose of enabling the rotary movement of the scroll wheel (7) based on the enable signal.

4. Operating device (1) according to one of the preceding claims, **characterized in that** the enable button (8) is arranged in the operating field (4) for operation by a thumb and the scroll area (6) is arranged in the said operating field for operation by another finger of a hand of the user.

5. Operating device (1) according to one of the preceding claims, **characterized in that** the operating field (4) comprises a palm rest (10) which has or forms the enable button (8).

6. Operating device (1) according to one of the preceding claims, **characterized in that** the enable button (8) is formed by a fingerprint sensor for identifying a user of the operating device (1), wherein the enable button (8) is coupled to an identification device which carries out comparison of a fingerprint which is detected by means of the enable button (8) with a fingerprint which is stored in the identification device and, in the event of correspondence, outputs a signal to the blocking and enable device for the purpose of enabling transmission of the signal containing the information about the selected drive setting by the blocking and enable device.

7. Method (100) for selecting drive settings of a motor vehicle transmission by means of a shift-by-wire operating device according to one of the preceding claims, wherein the method (100) comprises a step (110) of operating the enable button for the purpose of enabling at least the transmission of the information about a selected drive setting based on the operation of the scroll area by means of which one of the drive settings is selected depending on the operation of the said scroll area, and a step (120) of selecting the drive setting by operating the scroll area.

## Revendications

1. Dispositif d'actionnement (1) à commande électronique de type shift by wire en vue de la sélection de rapports de vitesse d'une transmission d'un véhicule à moteur, selon lequel le dispositif d'actionnement (1) comprend :
- une zone d'actionnement (4), dans laquelle sont disposées une surface de défilement (6) en vue de la sélection d'un des rapports de vitesse, ainsi qu'une touche de déclenchement (8), laquelle transmet un signal de déclenchement sur la base d'un actionnement, selon lequel la surface de défilement (6) et la touche de déclenchement (8) sont couplées l'une à l'autre par l'intermédiaire d'un mécanisme de blocage et de déclenchement, de telle sorte que chaque sélection visant à réaliser un changement d'un rapport de vitesse au moyen de la surface de défilement (6) requiert un signal de déclenchement au moyen de l'actionnement de la touche de déclenchement (8), en vue du déclenchement par l'intermédiaire du mécanisme de blocage et de déclenchement sur la base du signal de déclenchement ; et
- un mécanisme à capteur, lequel comprend tout au moins un générateur de signal et un récepteur de signal, selon lequel le générateur de signal est couplé à la surface de défilement (6) et interagit avec le récepteur de signal en vue de la détection d'un actionnement de la surface de défilement (6) et en vue de la transmission d'un signal qui inclut des informations relatives à un rapport de vitesse sélectionné et qui découlent de l'actionnement de la surface de défilement (6), selon lequel le signal qui inclut les informations relatives au rapport de vitesse sélectionné provoque un changement correspondant du rapport de vitesse sélectionné sur la transmission du véhicule à moteur ;
selon lequel le mécanisme de blocage et de déclenchement est configuré en vue du blocage et du déclenchement de la transmission du signal qui inclut les informations relatives au rapport de vitesse sélectionné, selon lequel le mécanisme de blocage et de déclenchement est interconnecté dans une voie de transmission, par l'intermédiaire de laquelle le signal qui inclut les informations relatives au rapport de vitesse sélectionné peut être transmis, et laquelle s'étend de la surface de défilement (6) jusqu'à la transmission du véhicule à moteur, et bloque la transmission du signal qui inclut les informations relatives au rapport de vitesse sélectionné, tout au moins jusqu'à la réception du signal de déclenchement ; **caractérisé en ce que**
la touche de déclenchement (8) est configurée en vue de transmettre un signal de blocage en réponse à un autre actionnement ; et
le mécanisme de blocage et de déclenchement est configuré en vue de bloquer, jusqu'à la réception d'un autre signal de déclenchement, la transmission du signal qui inclut les informations relatives au rapport de vitesse sélectionné lors de la réception ou après la réception du signal de blocage.

2. Dispositif d'actionnement (1) selon la revendication 1, **caractérisé en ce que** le mécanisme de blocage et de déclenchement est configuré en vue de bloquer, en l'absence du signal de blocage, la transmission du signal qui inclut les informations relatives au rapport de vitesse sélectionné après l'expiration d'une période de temps prédéterminée après la réception du signal de déclenchement.

3. Dispositif d'actionnement (1) selon la revendication 1 ou 2, **caractérisé en ce que** le mécanisme de blocage et de déclenchement comprend un élément de blocage mobile, lequel se trouve, dans un état de sortie, en prise avec une molette de défilement (7), laquelle forme la surface de défilement (6), en vue du blocage d'un mouvement de rotation de la molette de défilement (7) et est configuré en vue de libérer la prise en vue du déclenchement du mouvement de rotation de la molette de défilement (7), sur la base du signal de déclenchement.

4. Dispositif d'actionnement (1) selon l'une des revendications ci-dessus, **caractérisé en ce que** la touche de déclenchement (8) et la surface de défilement (6) sont disposées dans la zone d'actionnement (4), de telle sorte que la touche de déclenchement peut être actionnée par un pouce et que la surface de défilement peut être actionnée par un autre doigt de la main d'un utilisateur.

5. Dispositif d'actionnement (1) selon l'une des revendications ci-dessus, **caractérisé en ce que** la zone d'actionnement (4) comprend une surface d'appui pour le poignet (10), laquelle présente ou forme la touche de déclenchement (8).

6. Dispositif d'actionnement (1) selon l'une des revendications ci-dessus, **caractérisé en ce que** la touche de déclenchement (8) est formée par un capteur d'empreintes digitales destiné à la reconnaissance d'un utilisateur du dispositif d'actionnement (1), selon lequel la touche de déclenchement (8) est couplée à un mécanisme de reconnaissance, lequel réalise une comparaison d'une empreinte digitale détectée par l'intermédiaire de la touche de déclenchement (8) avec une empreinte digitale qui est archivée dans le mécanisme de reconnaissance et, si les deux empreintes digitales coïncident, envoie un signal au mécanisme de blocage et de déclenchement en vue du déclenchement de la transmission du signal qui inclut les informations relatives au rapport de vitesse sélectionné, par l'intermédiaire du mécanisme de blocage et de déclenchement.

7. Procédé (100) destiné à la sélection de rapports de vitesse d'une transmission d'un véhicule à moteur au moyen d'un dispositif d'actionnement à commande électronique de type shift by wire selon l'une des revendications ci-dessus, selon lequel le procédé (100) comprend une phase (110) d'actionnement de la touche de déclenchement en vue du déclenchement de tout au moins la transmission des informations relatives à un rapport de vitesse sélectionné sur la base de l'actionnement de la surface de défilement, au moyen de laquelle la sélection de l'un des rapports de vitesse est réalisée en fonction de son actionnement, ainsi qu'une phase (120) de sélection du rapport de vitesse par l'actionnement de la surface de défilement.
